Europäisches Patentamt

(19) European Patent Office

Office européen des brevets

(11) Veröffentlichungsnummer: **0 193 723**
B1

(12) EUROPÄISCHE PATENTSCHRIFT

(45) Veröffentlichungstag der Patentschrift:
03.05.89

(51) Int. Cl.⁴: **H02H 7/122**, H02M 3/156

(21) Anmeldenummer: 86100931.4

(22) Anmeldetag: 24.01.86

(54) Stromüberwachung für Schaltregler.

(30) Priorität: 28.01.85 DE 3502781

(43) Veröffentlichungstag der Anmeldung:
10.09.86 Patentblatt 86/37

(45) Bekanntmachung des Hinweises auf die Patenterteilung:
03.05.89 Patentblatt 89/18

(84) Benannte Vertragsstaaten:
CH DE FR GB IT LI NL SE

(56) Entgegenhaltungen:
DE-A- 3 206 266
US-A- 3 590 364
US-A- 4 278 930

(73) Patentinhaber: Siemens Aktiengesellschaft Berlin und
München, Wittelsbacherplatz 2, D-8000 München 2(DE)

(72) Erfinder: Schierjott, Rudolf, Dipl.-Ing.(FH),
Edlingerplatz 4, D-8000 München 90(DE)

## Beschreibung

Die Erfindung betrifft eine Schaltungsanordnung zur Stromüberwachung gemäß dem Oberbegriff des Patentanspruchs 1.

Bei Schaltstromversorgungen, Schaltumrichtern und ähnlichen Schaltungsanordnungen werden über Leistungsschalter periodisch hohe Ströme an Induktivitäten geschaltet. Hierbei tritt das Problem auf, daß der Strom im Leistungsschalter, d.h. im Halbleiterschaltelement bei Auftreten eines Überstromes begrenzt werden muß, um eine Zerstörung der Schaltelemente zu verhindern. Der Überstrom kann hervorgerufen werden durch Überlast, durch Kurzschluß, oder durch den Hochlauf von Schaltreglern unter kapazitiver Last.

Schmelzsicherungen und magnetische Überstromauslöser sind in der Regel zu träge, um bei einem raschen Stromanstieg den Halbleiter, d.h. den Leistungsschalter zu schützen. Außerdem lösen diese Elemente irreversibel aus. Aus diesem Grund ist es bekannt, Meßwiderstände, d.h. sogenannte Shunts oder Stromwandler in die zu schützenden Stromkreise zu schalten, und durch eine entsprechende Auswerteelektronik bei einem Überstrom im Leistungsschalter diesen auszuschalten. Diese Maßnahmen sind in dem Buch "Schaltnetzteile" von J. Wüstehube, Kapitel 5.41 und 5.42 bzw. 12.10.3 beschrieben. Diese Maßnahmen sind nicht nur sehr aufwendig, sondern rufen auch einen unerwünschten Spannungsabfall im Lastkreis hervor. Außerdem müssen für die Meßwiderstände wegen ihrer Niederohmigkeit teure Sonderbauformen verwendet werden.

Aus der US-A 4 278 930 ist eine Schaltungsanordnung zur Stromüberwachung in einem Gleichstromumrichter mit einem Serientransistor bekannt. Als Kriterium für den Laststrom wird dabei der Spannungsabfall an einem Meßwiderstand benutzt, der einen Zweig einer Widerstands-Meßbrücke darstellt. Die dem Laststrom proportionale Spannung an der Meßbrücke wird einem Differenzverstärker zugeführt, dessen Ausgang abhängig vom Wert des Spannungsabfalles an dem Meßwiderstand einen Pulsweitenmodulator ansteuert, der den Serientransistor über seine Basis bei Auftreten unzulässig hoher Lastströme sperrt.

Der Erfindung liegt die Aufgabe zugrunde, eine Schaltungsanordnung zur Stromüberwachung anzugeben, die einfach aufgebaut ist.

Diese Aufgabe wird erfindungsgemäß durch die im Patentanspruch 1 angegebenen Merkmale gelöst.

Ein Vorteil der erfindungsgemäßen Schaltungsanordnung zur Stromüberwachung besteht darin, daß keine teuren Meßwiderstände benötigt werden.

Ein weiterer Vorteil besteht darin, daß die erfindungsgemäße Schaltungsanordnung zur Stromüberwachung universell, d.h. beispielsweise für primär und sekundär getaktete Schaltregler anwendbar ist.

Ein großer Vorteil besteht weiter darin, daß bei hohen Temperaturen der Wicklungen der Induktivität der Strom auf Grund des positiven Temperaturkoeffizienten des Wicklungsdrahtes früher begrenzt wird.

Bei Verwendung eines Operationsverstärkers mit offenem Kollektor als Schwellwertschalter, ist dessen Ausgang direkt mit dem Ausgang eines Pulsbreitenmodulators zusammenschaltbar, sofern dieser ebenfalls einen Ausgangstransistor mit offenem Kollektor aufweist.

Im folgenden wird die Erfindung anhand eines in der Zeichnung dargestellten Ausführungsbeispieles erläutert.

Dabei zeigen

Fig. 1 einen bekannten Tiefsetzsteller,
Fig. 2 einen bekannten Hochsetzsteller,
Fig. 3 einen bekannten Primärschaltregler und
Fig. 4 die erfindungsgemäße Schaltungsanordnung zur Stromüberwachung.

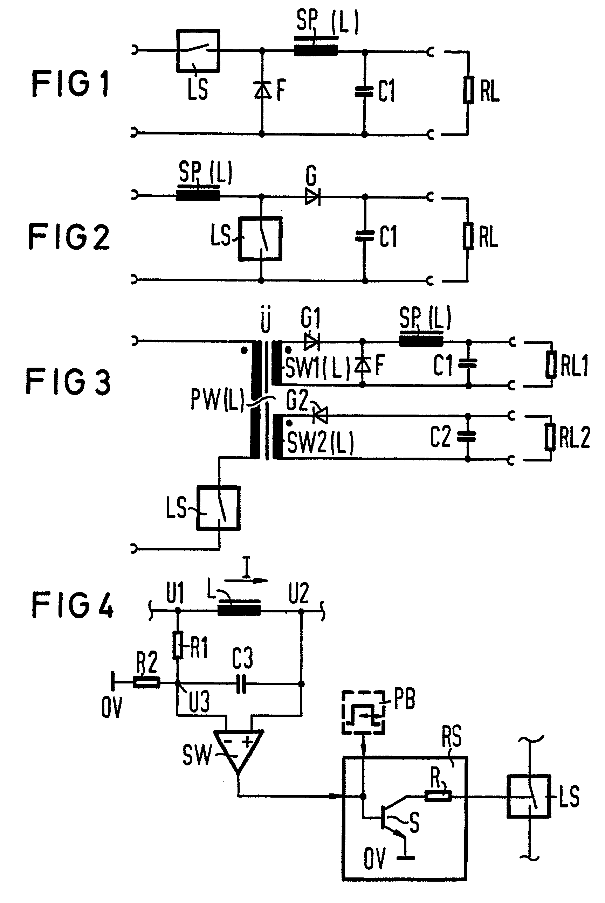

In den Figuren 1 mit 3 sind an sich bekannte Schaltregler dargestellt, wobei gleiche Bezugszeichen für gleichfunktionierende Bauteile verwendet wurden.

In Fig. 1 ist ein Tiefsetzsteller dargestellt, bei dem über einen Leistungsschalter LS eine Spule SP periodisch mit Strom geladen wird. Während der Leitendphase des Leistungsschalters LS fließt der Strom über diesen, über die Spule SP und weiter über einen angeschlossenen Lastwiderstand RL. Zur Glättung des Stromes ist ausgangsseitig an der Spule SP ein Glättungskondensator C1 angeschaltet. Während der Sperrphase des Leistungsschalters LS wird der Strom über eine Freilaufdiode F aufrechterhalten.

In Fig. 2 ist ein Hochsetzsteller dargestellt, bei dem über einen Leistungsschalter LS eine Spule SP periodisch mit Strom geladen wird. Während der Leitendphase des Leistungsschalters LS fließt der Strom in die Spule SP. Während der Sperrphase des Leistungsschalters LS wird die in der Spule SP gespeicherte Energie als Strom über eine Gleichrichterdiode G an den Lastwiderstand RL abgegeben. Zur Glättung des Stromes ist hier ebenfalls ausgangsseitig der Glättungskondensator C1 der Gleichrichterdiode G nachgeschaltet.

In Fig. 3 ist ein primär getakteter Umrichter mit einem Übertrager Ü dargestellt. Eine Primärwicklung PW des Übertragers Ü bildet zusammen mit dem Leistungsschalter LS den Eingangskreis. Sekundärseitig sind zwei Ausgangskreise dargestellt, wobei der obere zusammen mit dem Eingangskreis einen Durchflußwandler und der untere einen Sperrwandler darstellt.

Beim Durchflußwandler wird während der Leitendphase des Leistungsschalters LS Energie von der Primärwicklung PW auf die erste Sekundärwicklung SW1 des Übertragers Ü übertragen. Hierdurch wird ein Strom über eine erste Gleichrichterdiode G1 und die nachgeschaltete Spule SP an einen ersten Lastwiderstand RL1 abgegeben. Zur Glättung ist ausgangsseitig ein Glättungskondesator C1 vorgesehen. Während der Sperrphase des Leistungsschalters LS wird dieser Stromfluß über die Freilaufdiode F aufrechterhalten.

Beim Sperrwandler wird ebenfalls während der Leitendphase des Leistungsschalters LS Energie von der Primärwicklung PW auf eine zweite Sekundärwicklung SW2 des Übertragers Ü übertragen. Diese Energie wird während der Sperrphase des Leistungsschalters LS über eine zweite Gleichrichterdiode G2 an einen zweiten Lastwiderstand RL2 abgegeben. Zur Glättung ist hier ebenfalls ausgangsseitig ein Glättungskondensator C2 vorgesehen.

Die in den Fig. 1 und 2 dargestellten Sekundärschaltregler sind in Aufbau und Wirkungsweise in dem Buch "Halbleiterschaltungstechnik" von Tietze und Schenk, 5. Auflage im Kapitel 16.5.1 bechrieben. Der in Fig. 3 dargestellte Primärschaltregler mit seinen zwei möglichen Ausführungsformen als Durchfluß- bzw. Sperrwandler ist in dem Buch "Schaltnetzteile" von Joachim Wüstehube, 1979 in den Kapiteln 2 bzw. 3 beschrieben.

Der Erfindung liegt folgender Gedanke zugrunde.

Bei der erfindungsgemäßen Schaltungsanordnung zur Stromüberwachung wird zur Strommessung die vorhandene geschaltete Induktivität, d.h. die Spule SP (siehe Fig. 1, 2) bzw. die Primärwicklung PW oder eine der Sekundärwicklungen SW1, SW2 des Übertragers Ü (siehe Fig. 3) verwendet. Durch Mittelwertsbildung der geschalteten Spannung an der Induktivität über einen Tiefpaß, der beispielsweise durch ein RC-Glied realisiert ist, wird ein Abbild des ohmschen Spannungsabfalles gebildet. Dieser Spannungsabfall wird über einen Schwellwertschalter, der beispielsweise durch einen Komparator oder Operationsverstärker realisiert ist, zur Abschaltung des Leistungsschalters LS verwendet. Dieser Spannungsabfall ist ein Maß für den ohmschen Spannungsabfall am Wicklungswiderstand der Induktivität und somit ein Maß für den wirksamen Strom.

Günstig wirkt sich hierbei der positive Temperaturkoeffizient des Wicklungsdrahtes der geschalteten Induktivität aus. Bei hohen Wickeltemperaturen, die beispielsweise durch hohe Umgebungstemperaturen oder lange andauernde hohe Lasten hervorgerufen werden, wird der Strom früher begrenzt und somit einer übermäßigen Temperaturbelastung entgegengewirkt.

In Fig. 4 ist die erfindungsgemäße Stromüberwachung für Schaltregler dargestellt. Durch eine Induktivität L, an der eingangsseitig ein erster Spannungswert U1 und ausgangsseitig ein zweiter Spannungswert U2 abgreifbar ist, fließt ein Strom I. Diese Induktivität L kann durch eine der in den Figuren 1 bis 3 dargestellten Spulen SP bzw. durch eine der in Fig. 3 dargestellten Wicklungen PW, SW1, SW2 realisiert sein. Der Strom I wird somit direkt bei den Spulen SP und der Primärwicklung PW bzw. indirekt über den Übertrager Ü in den Sekundärwicklungen SW1, SW2 durch die Schaltvorgänge des Leistungsschalters LS hervorgerufen. Der Induktivität L ist die Serienschaltung aus einem RC-Glied, bestehend aus einem Widerstand R1 und einem Kondensator C3 in dieser Reihenfolge parallel geschaltet. Das Produkt aus dem ohmschen Wert des Widerstandes R1 und dem kapazitiven Wert des Kondensators C3 des RC-Gliedes ist etwa um den Faktor 10 größer als die Periodendauer der Schaltfrequenz des Schaltreglers.

Ein nicht näher bezeichneter Punkt zwischen dem Widerstand R1 und dem Kondensator C3, an dem ein dritter Spannungswert U3 abgreifbar ist, ist über einen Widerstand R2 mit einem Bezugspotential 0 verbunden. Weiter ist ein Schwellwertschalter SW vorgesehen, an dessen invertierenden Eingang der dritte Spannungswert U3, und an dessen nichtinvertierenden Eingang der zweite Spannungswert U2 anliegt. Der Kondensator C3 des RC-Gliedes ist also zwischen die Eingänge des Schwellwertschalters SW geschaltet, der beispielsweise durch einen Operationsverstärker realisiert ist. Der Ausgang des Schwellwertschalters SW ist an einer Regelstufe RS angeschaltet, an der beispielsweise ebenfalls das Ausgangssignal eines Pulsbreitenmodulators PB anliegt.

Die Regelstufe RS dient zur Ansteuerung des Leistungsschalters LS. Die Regelstufe RS weist beispielsweise einen Steuertransistor S und einen Widerstand R auf, so daß die Basis des Leistungsschalters LS, wenn dieser durch ein bipolares Halbleiterschaltelement realisiert ist, gegen das Bezugspotential 0 schaltbar ist.

Im folgenden wird die Wirkungsweise der erfindungsgemäßen Schaltungsanordnung zur Stromüberwachung beschrieben.

Durch die Induktivität L fließt ein impulsartiger Strom I. Über das RC-Glied, bestehend aus dem Widerstand R1 und dem Kondensator C3, wird durch Mittelwertbildung ein Abbild des ohmschen Spannungsabfalls an der Induktivität L gebildet. Dieser ohmsche Spannungsabfall, der am Kondensator C3 abgegriffen wird und an den Eingängen des Schwellwertschalters SW anliegt, bewirkt bei Überschreitung eines Grenzwertes eine Änderung des Ausgangssignals des Schwellwertschalters SW.

Der Schwellwert ist hierbei durch einen ohmschen Spannungsteiler, der durch die Widerstände R1 und R2 realisiert ist, einstellbar. Der dritte Spannungswert U3, der am invertierenden Eingang des Schwellwertschalters SW anliegt, ist dieser Schwellwert. Wenn der zweite Spannungswert U2, der am ausgangsseitigen Ende der Induktivität L abgreifbar ist und am nichtinvertierenden Eingang des Schwellwertschalters SW anliegt, den Schwellwert, d.h. den dritten Spannungswert U3 unterschreitet, so ändert der Schwellwertschalter SW seinen binären Ausgangswert von einem der logischen 1 entsprechenden Pegel zu einem der logischen 0 entsprechenden Pegel. Der zweite Spannungswert U2 sinkt um so weiter ab, je mehr der Strom I in die Induktivität L ansteigt. Der erste Spannungswert U1, und dadurch auch der von diesem abgeleitete dritte Spannungswert U3 sind weitgehend unabhängig vom Wert dieses Stromes I.

Wenn der Schwellwertschalter einen der logischen 1 entsprechenden Pegel abgibt, so wird bzw. bleibt über die Regelstufe RS der Leistungsschalter LS leitend geschaltet. Wenn der Schwellwertschalter SW einen der logischen 0 entprechenden Pegel abgibt, so wird hierdurch über die Regelstufe RS der Leistungsschalter LS gesperrt.

Es ist auch möglich, bei Verwendung eines entsprechenden Operationsverstärkers als Schwellwertschalter SW, den Leistungsschalter LS direkt, d.h. ohne Regelstufe RS anzusteuern.

Zur Einhaltung einer konstanten Ausgangsspannung wird die Regelstufe RS beispielsweise von einem Pulsbreitenmodulator PB angesteuert. Das Koppelnetzwerk zwischen der Ausgangsspannung des Schaltumrichters und dem Pulsbreitenmodulator PB ist für die Erfindung von untergeordneter Bedeutung und hier nicht dargestellt. Bei der in Fig. 4 dargestellten Schaltungsanordnung weisen der Pulsbreitenmodulator PB und der Schwellwertschalter SW jeweils einen Ausgangstransistor mit offenem Kollektor auf. Hierdurch ist es möglich, die Ausgänge dieser beiden Schaltstufen einfach galvanisch zu koppeln. Der Leistungsschalter LS wird über die Regelstufe RS immer dann gesperrt, wenn entweder der Pulsbreitenmodulator PB, zur Einhaltung einer konstanten Ausgangsspannung, oder der Schwellwertschalter SW, bei Überschreitung eines Maximalwertes durch die Induktivität L, an ihrem Ausgang einem der logischen 0 entsprechenden Pegel abgeben.

Bezugszeichenliste

SP Spule
L Induktivität
LS Leistungsschalter
RS Regelstufe
S Schalttransistor
F Freilaufdiode
G1, G2 Gleichrichterdioden
C1, C2 Glättungskondensatoren
C3 Kondensator
R, R1, R2 Widerstände
U1, U2, U3 erster, zweiter, dritter Spannungswert
Ü Übertrager
PW, SW1, SW2 Primär-, Sekundärwicklungen
PB Pulsbreitenmodulator
SW Schwellwertschalter
RL, RL1, RL2 Lastwiderstände

**Patentansprüche**

1. Schaltungsanordnung zur Stromüberwachung in einem Schaltumrichter, mit einer Induktivität (L), die über einen Leistungsschalter (LS) impulsweise mit einem Strom geladen wird, und mit einem Schwellwertschalter (SW), der bei Überschreitung eines vorgebbaren maximalen Spannungsabfalls den Leistungsschalter (LS) sperrt, dadurch gekennzeichnet, daß als Kriterium für das Ansprechen des Schwellwertschalters (SW) der Spannungsabfall an der Induktivität (L) dient und daß Schaltmittel (R1, C3) zur Bildung eines Mittelwertes dieses Spannungsabfalles vorgesehen sind.

2. Schaltungsanordnung nach Anspruch 1, dadurch gekennzeichnet, daß als Schaltmittel ein der Induktivität (L) parallel geschaltetes RC-Glied (R1, C3) vorgesehen ist.

3. Schaltungsanordnung nach Anspruch 2, dadurch gekennzeichnet, daß als Schwellwertschalter (SW) ein Operationsverstärker vorgesehen ist, zwischen dessen Eingänge der Kondensator (C3) des RC-Gliedes (R1, C3) geschaltet ist, und daß ein Widerstand (R2) vorgesehen ist, der zusammen mit dem Widerstand (R1) des RC Gliedes (R1, C3) einen Spannungsteiler bildet, an dem eine Referenzspannung (dritter Spannungswert U3) für den Schwellwertschalter (SW) gebildet wird.

4. Schaltungsanordnung nach Anspruch 3, dadurch gekennzeichnet, daß der Spannungsteiler (Widerstände R1, R2) zwischen das eingangsseitige Ende der Induktivität L und ein Bezugspotential 0 V geschaltet ist.

5. Schaltungsanordnung nach Anspruch 3 oder 4, gekennzeichnet durch einen Schwellwertschalter (SW) mit einem Ausgangstransistor mit offenem Kollektor.

6. Schaltungsanordnung nach einem der Ansprüche 1 bis 5, dadurch gekennzeichnet, daß die Induktivität (L) eine Spule (SP) in einem Tiefsetzsteller ist.

**Revendications**

1. Montage servant à contrôler le courant dans un convertisseur de commutation, comportant une inductance (L), qui est chargée de façon impulsionnelle par un courant, par l'intermédiaire d'un interrupteur de puissance (LS), et un commutateur à valeur de seuil (SW), qui bloque l'interrupteur de puissance (LS) dans le cas d'un dépassement d'une chute maximale de tension, pouvant être prédéterminée, caractérisé par le fait qu'on utilise, comme critère de la réponse du commutateur à valeur de seuil (SW), la chute de tension dans l'inductance (L) et qu'il est prévu des moyens de commutation (R1, C3) pour former une valeur moyenne de cette chute de tension.

2. Montage suivant la revendication 1, caractérisé par le fait qu'il est prévu, comme moyens de commutation, un circuit RC (R1, C3) branché en parallèle avec l'inductance (L).

3. Montage suivant la revendication 2, caractérisé par le fait qu'il est prévu comme commutateur à valeur de seuil (SW) un amplificateur opérationnel entre les entrées duquel est branché le condensateur (C3) du circuit RC (R1, C3), et qu'il est prévu une résistance (R) qui forme, conjointement avec la résistance (R1) du circuit RC (R1, C3), un diviseur de tension, dans lequel est formée une tension de référence (troisième valeur de tension U3) pour le commutateur à valeur de seuil (SW).

4. Montage suivant la revendication 3, caractérisé par le fait que le diviseur detension (résistances R1, R2) est branché entre l'extrémité, située du côté entrée, de l'inductance L et un potentiel de référence 0 V.

5. Montage suivant la revendication 3 ou 4, caractérisé par un commutateur à valeur de seuil (SW) comportant un transistor de sortie à collecteur ouvert.

6. Montage suivant l'une des revendications 1 à 5, caractérisé par le fait que l'inductance (L) est une bobine (SP) placée dans un régulateur de positionnement à un niveau bas.

## Claims

1. Circuit arrangement for current supervision in a switching converter, comprising an inductance (L) which is charged pulse by pulse with a current via a circuit breaker (LS), and with a threshold switch (SW) which blocks the circuit breaker (LS) when a predeterminable maximum voltage drop is exceeded, characterized in that the voltage drop across the inductance (L) is used for the activation of the threshold switch (SW) and that switching means (R1, C3) are provided for forming a mean value of this voltage drop.

2. Circuit arrangement according to Claim 1, characterized in that an RC section (R1, C3) connected in parallel with the inductance (L) is provided as switching means.

3. Circuit arrangement according to Claim 2, characterized in that an operational amplifier is provided as threshold switch (SW) between the inputs of which the capacitor (C3) of the RC section (R1, C3) is connected, and that a resistor (R2) is provided which, together with the resistor (R1) of the RC section (R1, C3), forms a voltage divider across which a reference voltage (third voltage value U3) is formed for the threshold switch (SW).

4. Circuit arrangement according to Claim 3, characterized in that the voltage divider (resistors R1, R2) is connected between the input end of the inductance (L) and a reference potential 0 V.

5. Circuit arrangement according to Claim 3 or 4, characterized by a threshold switch (SW) with an open-collector output transistor.

6. Circuit arrangment according to one of Claims 1 to 5, characterized in that the inductance (L) is a coil (SP) in a step-down chopper.

FIG 1

FIG 2

FIG 3

FIG 4